# EUROPÄISCHE PATENTANMELDUNG

(11) **EP 2 147 718 A1**
(43) Veröffentlichungstag der Anmeldung: **27.01.2010**
(21) Anmeldenummer: 09165448.3
(22) Anmeldetag: 14.07.2009
(51) Int. Cl.: B01J 21/06, B01J 37/00, B02C 4/00

(54) **Mahlung eines titandioxidhaltigen Katalysatorprodukts**

(30) Priorität: 15.07.2008 DE 102008033093
(71) Anmelder: Tronox Pigments GmbH, 47829 Krefeld (DE)
(72) Erfinder: Dr. Auer, Gerhard, 47800 Krefeld (DE); Dr. Krempels, Heinz-Christian, 47802 Krefeld (DE); Dr. Köhler, Berndt Ulrich, 47809 Krefeld (DE); Dr. Hipler, Frank, 47800 Krefeld (DE); Dörschug, Uwe, 47918 Tönisvorst (DE); Wittekopf, Frank, 47918 Tönisvorst (DE); Terhorst, Stephanie, 47799 Krefeld (DE)
(74) Vertreter: Viering, Jentschura & Partner

(57) **Zusammenfassung**

Bei einem Verfahren zur Herstellung eines Katalysatorrohstoffes für die Katalysatorherstellung, der zu mindestens 50 Gew.-%, bevorzugt mindestens 65 Gew.-% Titandioxid (TiO₂) enthält und eine BET-Oberfläche von 20 bis 400 m²/g, vorzugsweise 50 bis 150 m²/g aufweist, soll eine Lösung geschaffen werden, die es ermöglicht, einen formstabilen Katalysatorfestkörper weniger aufwendig herzustellen und die Bereitstellung eines Katalysatormaterials als Katalysatorrohstoff zu vereinfachen. Dies wird dadurch erreicht, dass zumindest ein Teil des Katalysatorrohstoffs in einer Walzenmühle, insbesondere einer Gutbett-Walzenmühle, gemahlen wird.

## Beschreibung

Die Erfindung richtet sich auf ein Verfahren zur Herstellung eines Katalysatorrohstoffes für die Katalysatorherstellung, der mindestens 50 Gew.-%, bevorzugt mindestens 65 Gew.-%, Titandioxid (TiO₂) enthält und eine BET-Oberfläche von 20 bis 400 m²/g, vorzugsweise 50 bis 150 m²/g, aufweist. Ebenso richtet sich die Erfindung auf eine Mühle zur Erzeugung eines Katalysatorrohstoffes sowie einen titandioxidhaltigen Katalysatorrohstoff zur Herstellung von Katalysatoren.

Die Entstehung von Stickoxiden (NOₓ) bei Verbrennungsprozessen ist unter Umweltgesichtspunkten problematisch, und es sind verschiedene Verfahren zur Reduktion von Stickstoffoxiden in Abgasen bekannt. Besondere Bedeutung hat die selektive katalytische Reduktion (SCR) erlangt, wobei die Stickoxide durch beigegebene stickstoffhaltige Verbindungen, bevorzugt Ammoniak oder Harnstoff, in Anwesenheit eines Katalysators reduziert werden. Die selektive katalytische Reduktion von Stickstoffoxiden mittels Ammoniak (NH₃-SCR) kann wie folgt zusammengefasst werden:

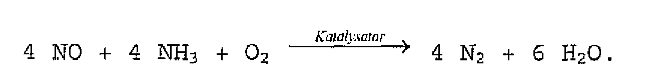

Einsatzgebiete sind im stationären Bereich etwa Kraftwerke, Kohlekraftwerke, Gaskraftwerke, Müllverbrennungsanlagen, Anlagen zur Salpetersäureproduktion oder -verarbeitung, Stahlwerke, sowie im mobilen Bereich etwa Kraftfahrzeuge, PKW, LKW, Baumaschinen, Schienenfahrzeuge und Schiffe.

Kommerzielle Katalysatoren für die SCR sind insbesondere Edelmetalle, Metalloxide und Zeolithe. Eine Übersicht liefert Pio Forzatti, Present status and perspectives in de-NOx SIR catalysis, in: Applied Catalysis A: General 222 (2001) 221-236. Ein wichtiges Katalysatorsystem sind die geträgerten WO₃- bzw. V₂O₅-WO₃-Katalysatoren auf einem TiO₂-Träger. Während V₂O₅ in der Regel die primäre aktive Katalysatorkomponente ist, wird WO₃ in diesen Katalysatoren verwendet, um u.a. die Aktivität und thermische Stabilität des Katalysators weiter zu erhöhen.

Die Katalysatoren werden in Form von formstabilen Festkörpern durch einen formgebenden Prozess hergestellt, beispielsweise mit Hilfe eines Extruders, mit Hilfe von Walzen oder mit Hilfe einer Presse und anschließend einer Wärmebehandlung in einem Kalzinierofen oder ähnlichem unterworfen. Ausgangsmaterial ist hierbei ein feinteiliger titandioxidhaltiger Katalysatorrohstoff, der beim Herstellungsverfahren für Titandioxid nach dem Sulfatverfahren anfällt. Dieses Verfahren wird beispielsweise in Industrial Inorganic Pigments, 3. Auflage, Herausgeber Gunther Buxbaum, Wiley-VCH, 2005 beschrieben. Insbesondere fällt dieses Material in Form von Titanoxidhydratpartikeln an, die durch Hydrolyse von Titanylsulfat entstehen. Dieses Titandioxid wird dann optional mit Wolframoxid versetzt und einem Kalzinierungsschritt im Temperaturbereich von 150°C bis 800°C, vorzugsweise 450°C bis 650°C, unterworfen.

Zur Herstellung der Katalysatoren wird dieses (ggf. wolframhaltige) Titandioxidmaterial dann mit weiteren Zusätzen, beispielsweise Vanadiumoxid, Glasfasern und anderen nachfolgend geschilderten Komponenten umgesetzt und zu einer plastischen, extrudierbaren Masse verarbeitet und dann dem formgebenden Prozess zugeführt.

Vor dieser Weiterverarbeitung des Katalysatorrohstoffes kann jedoch ein zusätzlicher, aufwendiger Mahlschritt erforderlich sein. Dies ist dadurch begründet, dass das bereits wolframhaltige Titandioxidmaterial nach dem Austritt aus dem Kalzinierofen, beziehungsweise nach der Temperaturbehandlung im Bereich zwischen 150°C und 800°C, in Form von Agglomeraten vorliegt, bei welchen die einzelnen Partikel durch Sinterbrücken oder ähnliche Verbindungen miteinander verbunden sind. Es kommt hierdurch zur Bildung von gröberen Partikeln, deren Anzahl und Masse durch die Bestimmung eines Siebrestes quantifiziert werden kann. Für höherwertige Katalysatoren, insbesondere Katalysatorwaben mit sehr geringer Stegbreite, ist eine Mahlung unerlässlich oder eine nachfolgende Siebung zur Eliminierung von gröberen Partikeln (>50 Mikrometer) notwendig.

Großtechnisch wird dieser Mahlprozess bisher üblicherweise in einer Pendelmühle, z.B. Raymond-Mühle durchgeführt. In dieser Pendelmühle wird das (ggf. wolframhaltige) Titandioxidmaterial zu einem feinen Pulver gemahlen. Dies macht es notwendig, dass die Mühlen mit einem Sichter und einem Staubfilter ausgestattet sind, was die bereits relativ hohen Investitionskosten für eine solche Mühle zusätzlich erhöht. Die Mahlung in solchen Mühlen ist somit teuer. Zum anderen wird hierbei aber auch ein extrem feines Pulver erhalten, das anschließend problematisch hinsichtlich seines weiteren Handlings ist, andererseits aber für die Bildung der formstabilen Katalysatorfestkörper in dem formgebenden Verfahrensschritt eine ausreichend feine Partikelstruktur aufweist. Das Mahlprodukt ist somit unmittelbar weiterverwendbar.

Zwar gibt es Mühlen, wie beispielsweise Walzenmühlen, bei denen feinteiliges Produkt zwischen zwei rotierenden Walzen zerkleinert, dabei aber zu Schülpen agglomeriert wird. Damit in der makroskopischen Struktur der Schülpe zusammengefasste mikroskopische Einzelpartikel weiter verarbeitbar werden, müssen diese Schülpen anschließend einem Desagglomerations- und/oder Dispergierschritt oder -verfahren unterworfen werden.

Der Erfindung liegt daher die Aufgabe zugrunde, eine Lösung zu schaffen, die es ermöglicht, einen formstabilen Katalysatorfestkörper weniger aufwendig herzustellen und die Bereitstellung eines Katalysatormaterials als Katalysatorrohstoff zu vereinfachen.

Diese Aufgabe wird erfindungsgemäß durch ein Verfahren nach Anspruch 1, eine Mühle nach Anspruch 9 und einen Katalysatorrohstoff nach Anspruch 12 oder 13 gelöst. Weiterbildungen und Ausgestaltungen der Erfindung sind Gegenstand der jeweiligen Unteransprüche.

Bei dem Verfahren wird zumindest ein Teil eines Zwischenprodukts oder des Katalysatorrohstoffs in einer Walzenmühle, insbesondere einer Gutbett-Walzenmühle, gemahlen. In einer Ausführungsform der Erfindung wird das Zwischenprodukt oder der Katalysatorrohstoff nach der Kalzinierung des bei der Titandioxidherstellung erhaltenen oder verwendeten Ausgangsrohstoffs zunächst gesiebt und der erhaltene Grobanteil in einer Walzenmühle, vorzugsweise einer Gutbett-Walzenmühle, gemahlen. Bevorzugt werden die Schülpen nach der Walzenmahlung keiner Mahlung bzw. keiner unmittelbar nachfolgenden Desagglomerations- und/oder Dispergierbehandlung unterworfen. Besonders bevorzugt werden die Schülpen ohne Durchlaufen einer Desagglomerations- und/oder Dispergierbehandlung versandfertig gemacht oder direkt der nachfolgenden Herstellung des jeweiligen Kataysatorfestkörpers/Katalysatorformkörpers oder der Katalysator-Formkörper oder -Festkörper zugeführt. Der derart hergestellte Katalysatorrohstoff wird dann dazu verwendet, um als - in diesem Falle wolframhaltiges - Titandioxidmaterial mit weiteren Zusätzen, beispielsweise Vanadiumoxid, Glasfasern und anderen Komponenten, umgesetzt und zu einer plastischen, extrudierbaren Masse verarbeitet zu werden. Diese Masse wird dann dem formgebenden Prozess, beispielsweise einer Verarbeitung in einem Extruder, zugeführt und zu einem Katalysatorformkörper verarbeitet. Der hergestellte Katalysatorformkörper wird einem weiteren Kalzinierungsschritt zur Herstellung des fertigen Katalysators in Form eines Katalysatorfestkörpers unterworfen.

Neben dem vorstehend beschriebenen gegebenenfalls wolframhaltigen Titandioxidmaterial kann der Katalysatorrohstoff aber auch aus im Rahmen des Sulfatverfahrens als Titantdioxidmaterial mit mehr als 50 Gew.-% Anteil an TiO₂ anfallendem Ausgangsmaterial hergestellt werden, welches Ausgangsmaterial dann keinem unmittelbar nachfolgenden Kalzinierprozess unterworfen, aber dennoch in der Walzenmühle, insbesondere Gutbett-Walzenmühle, zu dem Katalysatorrohstoff gemahlen wird. Auch dieser dann in Schülpenform vorliegende Katalysatorrohstoff wird dem weiteren Herstellprozess des Katalysators zugeführt, d.h. anschließend mit weiteren Zusätzen, wie beispielsweise Vanadiumoxid oder Glasfasern, umgesetzt und zu einer plastischen, extrudierbaren Masse verarbeitet und anschließend dem formgebenden Prozess, beispielsweise in einem Extruder, zum Erhalt eines Katalysatorformkörpers unterworfen. Auch dieser Katalysatorformkörper wird dann noch einem weiteren Kalzinierungsschritt unterworfen, so dass spätestens danach ein Katalysatorfestkörper vorliegt.

Insofern ist die Herstellung eines Katalysators durch Vermischen mindestens eines titandioxidhaltigen Rohstoffes mit weiteren Zusatzkomponenten in einem formgebenden Verfahren aus der DE 44 19 974 C2 bekannt. Dort wird aber Titandioxidpigment als titandioxidhaltiger Katalysatorrohstoff eingesetzt, der deutlich feinteiliger als der erfindungsgemäße Katalysatorrohstoff oder das dafür verwendete Ausgangsmaterial, nämlich mit Teilchengrößen von 1-500 µm, anfällt, wobei das Titandioxidpigment darüber hinaus bei deutlich höheren Temperaturen, nämlich im Temperaturbereich von 800°C - 1000°C, kalziniert und danach gemahlen wird.

Überraschenderweise hat sich herausgestellt, dass es für die Herstellung eines formstabilen Festkörpers aus titandioxidhaltigem Katalysatormaterial als Katalysatorrohstoff ausreichend ist, wenn dieser Katalysatorrohstoff vor seiner Vermischung und/oder Vermahlung sowie Verarbeitung zu dem Katalysatorformkörper lediglich in einer Walzenmühle gemahlen wird. Dies ggf. nach einer Kalzinierung bei 150°C - 800 °C, insbesondere wenn wolframhaltiges Material eingearbeitet worden ist, aber auch dann, wenn keine Kalzinierung des vorzugsweise im Sulfatverfahren erhaltenen titandioxidhaltigen (Ausgangs-)Materials erfolgt. Hierbei werden alle, ggf. während der Kalzinierung entstandenen, Bindungsbrücken auf der mikroskopischen Ebene aufgebrochen und eine Partikelgröße erhalten, die für die Verwendung als Katalysatormaterial oder Katalysatorrohstoff und die Verwendung im nachfolgenden oder später folgenden formgebenden Prozess oder Behandlungsschritt geeignet ist. Da sich überraschend herausgestellt hat, dass die innerhalb der Schülpe vorhandene Partikelgröße für die spätere Weiterverarbeitung in dem formgebenden Prozess ausreichend ist, ist es nicht mehr notwendig, 1 die Schülpe aufzulösen und gegebenenfalls einer weiteren Behandlung zu unterziehen, um noch feinteiligere Titandioxidpartikel zu erhalten.

Zur Herstellung eines Katalysatorformkörpers und/oder des formstabilen Festkörpers aus dem als Katalysatorrohstoff verwendeten titandioxidhaltigen Katalysatormaterial ist es zwar notwendig, die - ggf. bei der Kalzinierung erhaltenen - Titandioxidpartikel zu zerkleinern. Aber diese Zerkleinerung erfolgt bevorzugt nicht direkt am walzengemahlenen Produkt, den Schülpen, sondern erst zusammen mit anderen Komponenten beim späteren Knetprozess oder formgebenden Prozess, in welchem das titandioxidhaltige Zwischenprodukt oder der Katalysatorrohstoff dann weiterverarbeitet wird.

So ist es möglich, die Schülpen ggf. zusammen mit anderen Materialien unmittelbar einem formgebenden Prozess, z.B. einem Kneter und/oder Extruder oder Kneter und/oder Walze zur Durchführung einer Extrusion bzw. Plattenbeschichtung mit damit bewirkter Bildung von Formkörpern, zuzuführen. Es ist aber auch möglich, die Schülpen einer Behandlungsstufe zuzuführen, in der dem ggf. wolframhaltigen Titandioxidmaterial beziehungsweise der Schülpe ein Metalloxid, insbesondere ein Vanadiumoxid, zugesetzt wird, und diese Mischung dann den formgebenden Verfahrens- oder Behandlungsschritt zugeführt wird.

Jedenfalls ist nach der Mahlung kein ausdrücklicher Desagglomerations- und/oder Dispergierschritt oder eine solche Vorrichtung für eine Zerkleinerung der Schülpen allein mehr notwendig und vorgesehen. Das Verfahren zur Herstellung eines formstabilen Festkörpers aus Katalysatormaterial ist somit gegenüber dem vorbekannten Stand der Technik vereinfacht, weniger aufwendig und aufgrund verminderter Investitionskosten, aber auch verminderter Anlagenbestandteile oder -vorrichtungen, kostengünstiger. Insbesondere ist die Herstellung und Bereitstellung des Zwischenproduktes oder Katalysatorrohstoffs vereinfacht und kostengünstiger. So entsteht bei der Walzenmahlung kein Staub. Die erhaltenen Schülpen samt den darin enthaltenen, feingemahlenen Agglomeraten sind problemlos lagerfähig, transportierbar und weiterverarbeitbar. Da auf einen Desagglomerations- und/oder Dispergierschritt verzichtet wird, entfallen derartige Einrichtungen oder Vorrichtungen, wodurch das Investitionsvolumen sowie die Betriebskosten verringert werden. Da solche Einrichtungen oder Vorrichtungen nicht vorhanden sein müssen, wird dadurch auch der Gesamtenergieverbrauch der Anlage beziehungsweise des Herstellungsverfahrens verringert. Außerdem wird weniger Platz beansprucht, da insgesamt weniger Einrichtungen oder Vorrichtungen vorgesehen werden müssen. Dadurch ergibt sich weiterhin eine weniger komplexe Struktur der insgesamt zusammen wirkenden Aggregate und Einrichtungen. Zudem ist eine bessere Überwachung und günstigere Instandhaltung möglich.

Die Mahlung in der Walzenmühle lässt sich insbesondere in einer Gutbett-Walzenmühle mit einem Liniendruck zwischen 15 und 50 kN/cm, vorzugsweise 25 und 35 kN/cm, durchführen, was die Erfindung in Ausgestaltung vorsieht.

Ein besonders vorteilhaftes formgebendes Verfahren stellt die Extrusion mittels eines Extruders und einer am Ende des Extruders angeordneten Sieb- oder Lochscheibe, aus der die Formkörper herausgepresst werden, dar. Die Erfindung zeichnet sich daher weiterhin auch noch dadurch aus, dass die Schülpen nach der Mahlung und Verknetung einem formgebenden Verfahren, insbesondere einer Extrusion oder Plattenbeschichtung mittels Walzen, zugeführt werden.

Besonders vorteilhaft ist, dass die walzengemahlenen Schülpen bei der Verknetung mit den übrigen Bestandteilen eine geringere Wasseraufnahme und eine verbesserte Bearbeitbarkeit zeigen als ein ungemahlenes oder feingemahlenes Material.

Die vorstehende Aufgabe wird bei einer Mühle dadurch gelöst, dass die Mühle eine Gutbett-Walzenmühle ist.

Die Erfindung betrifft daher auch eine Mühle zur Erzeugung eines Katalysatorrohstoffs, wobei die Mühle eine Gutbett-Walzenmühle ist und wobei die die Mühle verlassenden Schülpen ohne Durchlaufen einer Desagglomerations- und/oder Dispergiervorrichtung einem nachfolgenden, formgebenden Verfahren zugeführt werden.

Da die Mühle weiterhin zweckmäßigerweise Bestandteil einer Produktions-Anlage zur Herstellung von Titandioxid nach dem Sulfatverfahren ist, zeichnet sich die Erfindung weiterhin dadurch aus, dass die Mühle Bestandteil einer Anlage zur Herstellung von Titandioxid, insbesondere nach dem Sulfatverfahren, oder zumindest Bestandteil einer insbesondere einer solchen Anlage unmittelbar nachgeordneten Ergänzungsanlage ist. Unter Ergänzungsanlage werden hier die Einrichtungen und Vorrichtungen verstanden, die notwendig sind, um das unmittelbar nach der Hydrolyse des Sulfatverfahrens erhaltene Material, insbesondere Titanoxidhydratpartikel, weiter aufzubereiten.

Schließlich zeichnet sich die Erfindung auch noch dadurch aus, dass der Mühle eine den Katalysatorrohstoff weiterverarbeitende Konditionierungs- und/oder Formgebungsvorrichtung, insbesondere ein Kneter und/oder ein Extruder und/oder eine Walze, nachgeordnet ist.

Ein formstabiler Festkörper aus Katalysatormaterial wird aus einer Zusammensetzung, die den erfindungsgemäßen Katalysatorrohstoff enthält, hergestellt. Ausgangsstoff für die Herstellung einer solchen Zusammensetzung ist Titandioxid, insbesondere ein Titandioxidhydrat (z.B. Orthotitansäure oder Metatitansäure). Ein besonders bevorzugtes Ausgangsmaterial ist eine bei der Herstellung von Titandioxid nach dem Sulfatverfahren erhältliche gereinigte, gewaschene und sog. gebleichte Titanoxidhydratsuspension. Dieses gewaschene und gebleichte Hydrolysat wird ganz oder teilweise neutralisiert und die so erhaltene Suspension filtriert und mit Wasser, bevorzugt vollentsalztem Wasser, gewaschen, um den Gehalt an unerwünschten löslichen Bestandteilen, wie etwa Alkaliverbindungen und Sulfaten, zu reduzieren. Auf diese Weise wird zunächst ein Filterkuchen erhalten. Zur Einstellung der gewünschten Eigenschaften können notwendige Zusätze vor, während oder nach den Verfahrensschritten Filtration und Wäsche zugesetzt werden. Bevorzugt wird die Titanoxidhydratsuspension nur teilweise neutralisiert, so dass der Gehalt an gebundenem Sulfat im Filterkuchen bzw. im kalzinierten Produkt bis zu 7 Gew.-%, bevorzugt 0,5 bis 3 Gew.-% beträgt. Ein Sulfatgehalt in dieser Größenordnung ist von Vorteil für die katalytischen Eigenschaften.

Dieses Material - und damit auch das später erhaltene titandioxidhaltige Zwischenprodukt oder der titandioxidhaltige Katalysatorrohstoff - wird bei 150°C bis 800 °C, vorzugsweise 450°C bis 650°C, kalziniert. Das erhaltene titandioxidhaltige Material weist nach der Kalzinierung eine BET-Oberfläche von 20 bis 400 m²/g, besonders bevorzugt 50 bis 150 m²/g auf. Die Bestimmung der BET-Oberfläche erfolgt dabei hier sowie auch an den anderen BET-Oberflächen angebenden Stellen nach DIN ISO 9277 mittels N₂ bei 77 K an einer bei 140 °C während 1 Stunde entgasten und getrockneten Probe aus den Titandioxidpartikeln. Die Auswertung erfolgt über Mehrpunktbestimmung (10-Punkt-Bestimmung).

Zur Herstellung der bevorzugt pulverigen Zusammensetzung kann das Titandioxid mit Wolframoxid versetzt werden.

Nach dem Versetzen mit der wolframhaltigen Lösung wird das (beschichtete) TiO₂-Pulver in der Regel abfiltriert, getrocknet, vorzugsweise durch Sprühtrocknen, und anschließend kalziniert oder aber direkt nach der Filtration kalziniert. Zur Kalzinierung werden Temperaturen von über 150 °C, beispielsweise 150°C bis 800 °C, vorzugsweise 350 bis 800 °C, und am bevorzugtesten 450 bis 650 °C angewendet.

Das wolframhaltige Titandioxidpulver weist vorzugsweise eine BET-Oberfläche von 20 bis 400 m²/g, besonders bevorzugt 50 bis 150 m²/g auf.

Nach der Kalzinierung wird das erhaltene wolframhaltige Titandioxidmaterial einer Gutbett-Walzenmühle zugeführt und dort vorzugsweise mit einem Liniendruck zwischen 15 und 50 kN/cm gemahlen. Es entstehen die typischen Schülpen, wobei in der Oberfläche der Walzen der Gutbett-Walzenmühle Profile oder Strukturen ausgebildet sein können, die spezielle Schülpenformen erzeugen. Ohne dass nun ein Deagglomerations- oder Dispergierschritt erfolgt, können die durch die Mahlung erhaltenen Schülpen nun einem nachfolgenden Verfahrensschritt zugeführt werden.

Es ist aber auch möglich, das nach der nur teilweisen Neutralisierung der Titanoxidhydratsuspension erhaltene titandioxidhaltige Material ohne Durchführung eines Kalzinierungsschrittes der Mahlung in einer Walzenmühle, insbesondere einer Gutbett-Walzenmühle, zuzuführen und auf diese Weise direkt zu dem erfindungsgemäßen Katalysatorrohstoff weiterzuverarbeiten.

Das jeweils erhaltene Zwischenprodukt oder der jeweils erhaltene Katalysatorrohstoff wird dann zur weiteren Aufbereitung als Katalysatormaterial weiterverarbeitet.

Hierbei kann dann dem erfindungsgemäß in der Walzenmühle aufbereiteten Katalysatorrohstoff auch anderes titandioxidhaltiges Material zugemischt werden. Es ist möglich, beispielsweise hier eine Mischung aus nach der Teilneutralisation der Titanoxidhydratsuspension unmittelbar erhaltenem titandioxidhaltigem Material mit solchem zu vermischen, das - insbesondere nach Durchlaufen des Kalzinierungsschrittes im Bereich von 150°C - 800°C - eine Walzenmahlung durchlaufen hat.

Das jeweils erhaltene Zwischenprodukt oder der jeweils erhaltene, ggf. wolframhaltige, Katalysatorrohstoff kann zur weiteren Aufbereitung als Katalysatormaterial mit wenigstens einem Metalloxid ausgewählt aus der Gruppe bestehend aus den Oxiden von Vanadium, Molybdän, Chrom, Kupfer, Eisen, Mangan, Niob, Nickel, Kobalt, Antimon, Bismuth, Lanthan, Yttrium, Scandium, Zirkonium, Magnesium, Hafnium, Tantal, Terbium, Cer, Ytterbium, Erbium, Samarium und Barium und/oder mit wenigstens einem Metall ausgewählt aus der Gruppe bestehend aus Gold, Silber, Ruthenium, Palladium, Platin und Rhodium versetzt werden.

Die erfindungsgemäßen Zusammensetzungen, d.h. das/der durch das erfindungsgemäße Herstellungsverfahren erhaltene Zwischenprodukt oder Katalysatorrohstoff, können 0 bis 20 Gew.-%, vorzugsweise 4 bis 12 Gew-% WO₃ bezogen auf die Gesamtmenge an TiO₂ und WO₃ enthalten.

In einer weiteren Ausführungsform der Erfindung können die erfindungsgemäßen Zusammensetzungen, d.h. das/der durch das erfindungsgemäße Herstellungsverfahren erhaltene Zwischenprodukt oder Katalysatorrohstoff, 2 bis 20 Gew.-%, vorzugsweise 4 bis 12 Gew.-% WO₃ sowie 2 bis 25 Gew.-%, vorzugsweise 4 bis 15 Gew.-% SiO₂ bezogen auf die Gesamtmenge an TiO₂, SiO₂ und WO₃ enthalten.

Besonders bevorzugt sind Zusammensetzungen mit einem WO₃-Gehalt von 4 bis 12 Gew.-%, einem V₂O₅-Gehalt von 0,5 bis 3 Gew.-% und einer BET-Oberfläche von 50 bis 150 m²/g.

Die Erfindung betrifft daher auch einen titandioxidhaltigen Katalysatorrohstoff zur Herstellung von Katalysatoren, wobei der Katalysatorrohstoff mindestens 50 Gew.-%, bevorzugt mindestens 65 Gew.-%, Titandioxid enthält, eine BET-Oberfläche von 20 bis 400 m²/g, vorzugsweise 50 bis 150 m²/g, aufweist und in Form von Schülpen, wie sie bei der Mahlung in einer Gutbettwalzenmühle erhalten werden, vorliegt.

Des Weiteren betrifft die Erfindung auch einen titandioxidhaltigen Katalysatorrohstoff zur Herstellung von Katalysatoren, wobei der Katalysatorrohstoff mindestens 50 Gew.-%, bevorzugt mindestens 65 Gew.-% Titandioxid enthält und eine BET-Oberfläche von 20 bis 400 m²/g, vorzugsweise 50 bis 150 m²/g aufweist, sowie bei einer Trockensiebung über ein Sieb mit 300 µm Maschenweite einen Siebrest von >70% und bei einer Nasssiebung über ein Sieb mit 300 µm Maschenweite einen Siebrest von <5% aufweist.

Zur Herstellung des formstabilen Katalysatorfestkörpers aus der Zusammensetzung wird die mit der aktiven Katalysatorkomponente, vorzugsweise V₂O₅, versehene, das Zwischenprodukt oder den Katalysatorrohstoff aufweisende Zusammensetzung mit Bindemitteln und weiteren Additiven wie Glasfasern vermischt, vorzugsweise unter Anwesenheit von Wasser, um eine keramische Paste herzustellen. Die pulverige Zusammensetzung wird hierbei vorzugsweise in einer Menge von 60 bis 95 Gew.-%, insbesondere 70 bis 90 Gew.-% in Bezug auf die so erhaltene Mischung verwendet.

Als Bindemittel und/oder Thixotropiemittel werden Schichtsilicate wie Bentonit und Kaolin, Ringsilikate, Gerüstsilikate, oder amorphe Silikate verwendet. Typische Beispiele für Minerale mit schichtförmigen Baueinheiten (Phyllosilicate) sind Serpentin Mg₃(OH)₄[Si₂O₅], Kaolinit Al₄[(OH)₈|Si₄O₁₀], sowie Montmorillonit (Al₂[(OH)₂/Si₄O₁₀]•nH₂O) als Hauptmineral des Bentonits. Ebenfalls geeignet sind beispielsweise Talkum (Mg₃Si₄O₁₀(OH)₂), Feldspat ((Ba,Ca,Na,K,NH₄)(Al,B,Si)₄O₈) und/oder Cordierit ((Mg,Fe²⁺)₂(Al₂Si)^{[4]}[Al₂Si₄O₁₈]) und/oder Diatomeenerde. Weiterhin sind auch Mischungen der genannten Silicate geeignet.

Weitere Additive, die in der Mischung enthalten sein können, umfassen beispielsweise Glasfasern zur Strukturverstärkung, Acrylpolymere als Bindemittel, Polyvinylalkohol, Polyacrylamid, Polyvinylpyrrolidon, Cellulose oder Cellulosederivate als Quell-/Plastifizierungsmittel, Ammoniumhydroxid, organische Säuren wie z.B. Milchsäure oder Oxalsäure als Lösungsvermittler und/oder Komplexbildner, sowie Aminoalkohole wie z.B. Aminomethylpropanol oder Monoethanolamin zur pH-Einstellung.

Dieses Gemisch wird in einem formgebenden Verfahren vorzugsweise geknetet und dann in eine bestimmte Form gebracht, vorzugsweise durch Extrudieren oder Pressen oder Aufwalzen. Besonders bevorzugt wird das Gemisch zu einem wabenförmigen Festkörper extrudiert.

Nach dem Extrudieren bzw. Pressen wird der erhaltene Katalysatorformkörper getrocknet und anschließend kalziniert. Die so erhaltenen Wabenkörper weisen vorzugsweise eine Wanddicke von 0,25 bis 2 mm und eine Kanalbreite von 1 bis 10 mm auf.

Bei der Herstellung von Plattenkatalysatoren wird wie folgt vorgegangen: Das erhaltene Gemisch aus der pulverigen Zusammensetzung und den Bindemitteln und weiteren Additiven wird auf formgebende und ggf. perforierte Platten, z.B. aus Papier oder Keramik, oder auf Metall bzw. Metallnetze beschichtet, und anschließend wird die Beschichtung getrocknet und kalziniert.

Die Zusammensetzung eignet sich sehr gut zur Verwendung als Katalysator in der Abgasreinigung, insbesondere für eine effiziente katalytische Reduktion von Stickstoffoxiden (NOₓ) in Abgasen. Die formstabilen Festkörper oder Katalysatorfestkörper finden Verwendung als Katalysator zur Verminderung von Stickoxiden, insbesondere für die selektive katalytische Reduktion (SCR).

Einsatzgebiete sind im stationären Bereich etwa Kraftwerke, Kohlekraftwerke, Gaskraftwerke, Müllverbrennungsanlagen, Anlagen zur Salpetersäureproduktion oder -verarbeitung, Stahlwerke, sowie im mobilen Bereich etwa Kraftfahrzeuge, PKW, LKW, Schiffe, Baumaschinen oder Schienenfahrzeuge.

Der formstabile Festkörper kann auch für die katalytische Oxidation von SO₂ oder organischen Verbindungen wie etwa Dioxinen verwendet werden.

### Beispiel 1:

Im Prozess der keramischen Weiterverarbeitung von walzengemahlenem TiO₂ (z.B. wolframhaltigem TRONOX A-DW-1 walzengemahlen oder TRONOX A-K-1 walzengemahlen) zu dem Zwischenprodukt oder Katalysatorrohstoff wird in einem Meßkneter (beispielsweise Haake Polylab - Haake Rheomix 600 mit Nockenrotoren) die Effizienz der Walzenmahlung im keramischen Knetprozess nachgewiesen:
Dafür wird eine Trockenmischung im Kneter hergestellt aus 40% bis 80 %, vorzugsweise 50% bis 70% nicht walzengemahlenem Titandioxidpulver als Referenz (nicht walzengemahlenes TRONOX A-DW-1 oder A-K-1) mit 0% bis 3%, vorzugsweise 1% bis 2,5% eines wasserlöslichen, quellfähigen organischen Plastifizierungsmittels (beispielsweise Cellulosederivat, Polyvinylalkohol, Polyacrylamid, Polyvinylpyrrolidon), mit 0% bis 20%, vorzugsweise 5% bis 15% eines anorganischen Bindemittels aus der Gruppe der Schichtsilikate, Ringsilikate, Gerüstsilikate, oder amorphen Silikate (beispielsweise Mg₃Si₄O₁₀(OH)₂ Talkum (Ba,Ca,Na,K,NH₄)(Al,B,Si)₄O₈ Feldspat und/oder Mg₃(OH)₄[Si₂O₅] Serpentin, Al₄[(OH)₈|Si₄O₁₀] Kaolinit und/ oder (Mg,Fe²⁺)₂(Al₂Si)^{[4]}[Al₂Si₄O₁₈] Cordierit und/oder Bentonit und/ oder Diatomeenerde) oder mit einer Mischung derselben. Eine ähnliche Mischung mit der gleichen Zusammensetzung wird durch Ersetzen des Referenz-Titandioxid-Pulvers mit erfindungsgemäßem walzengemahlenem, titandioxidhaltigem Katalysatorrohstoff hergestellt.

Anschließend wird mit leicht basisch eingestelltem Anmachwasser auf 100 Teile aufgefüllt und der Prozess der Plastifizierung mit Hilfe eines Meßkneters registriert. Dabei wird die Zeit von der Zunahme des Drehmoments kurz nach der Anmachwasserzugabe bis zum Zeitpunkt der Plastifizierung aufgezeichnet und als tₚₑₐₖ (time to peak) angegeben.

Ein niedriger Wert des tₚₑₐₖ weist auf eine vorteilhaft verlaufende, schnelle Plastifizierung hin. Eine kürzere Plastifizierungszeit ist günstig für die Auslastung und die Produktivität der Anlagen und für die Erhöhung des Ausstoßes von keramischen Artikeln. Die Höhe des Drehmoments gibt einen Hinweis auf die in das Material übertragene Energie. Als Grundregel gilt, dass eine hohe Knetenergie zu feinteiligem, plastischem Knetgut führt (günstiges Deformationsverhältnis nach Pfefferkorn). Ein homogenes Knetgut ist vorteilhaft für die Erzeugung eines gleichmäßigen, rissfreien Scherbens.

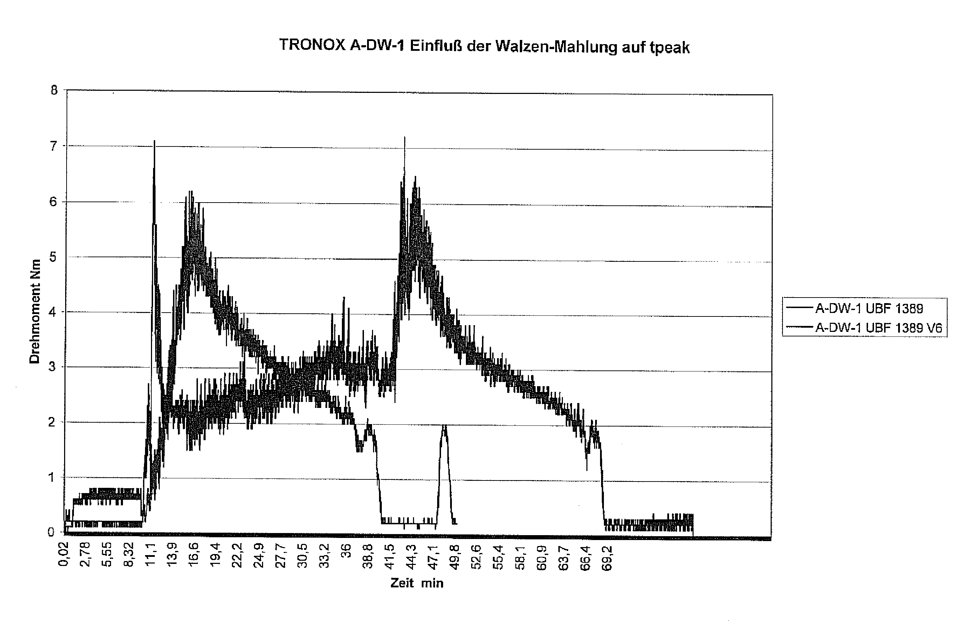

In Abbildung 1 sind typische Knetkurven von TRONOX A-DW-1 - Versätzen mit pulverförmigem Referenzmaterial Maximum bei ca. 44 min) und erfindungsgemäßem walzengemahlenem Katalysatorrohstoff (Maximum bei ca. 15 min) im Vergleich dargestellt.

## Patentansprüche

1. Verfahren zur Herstellung eines Katalysatorrohstoffes für die Katalysatorherstellung, der zu mindestens 50 Gew.-%, bevorzugt mindestens 65 Gew.-% Titandioxid (TiO₂) enthält und eine BET-Oberfläche von 20 bis 400 m²/g, vorzugsweise 50 bis 150 m²/g aufweist, **dadurch gekennzeichnet,**
**dass** zumindest ein Teil des Katalysatorrohstoffs in einer Walzenmühle, insbesondere einer Gutbett-Walzenmühle, gemahlen wird.

2. Verfahren nach Anspruch 1, **dadurch gekennzeichnet, dass** der Katalysatorrohstoff vor der Mahlung in der Walzenmühle bei 150 °C bis 800 °C, vorzugsweise 450 °C bis 650 °C, kalziniert wird.

3. Verfahren nach Anspruch 1 oder 2, **dadurch gekennzeichnet, dass** der Katalysatorrohstoff 0 bis 20 Gew.-%, vorzugsweise 4 bis 12 Gew.-% WO₃ enthält, bezogen auf die Gesamtmenge an TiO₂ und WO₃,

4. Verfahren nach einem der vorhergehenden Ansprüche, **dadurch gekennzeichnet, dass** der Katalysatorrohstoff 2 bis 20 Gew.-%, vorzugsweise 4 bis 12 Gew.-% WO₃ sowie 2 bis 25 Gew.-%, vorzugsweise 4 bis 15 Gew.-% SiO₂ enthält, bezogen auf die Gesamtmenge an TiO₂, SiO₂ und WO₃.

5. Verfahren nach einem der vorhergehenden Ansprüche, **dadurch gekennzeichnet, dass** die die Walzenmühle verlassenden Schülpen keiner nachfolgenden Mahlung, insbesondere zum Zwecke der Desagglomerierung, unterworfen werden.

6. Verfahren nach einem der vorhergehenden Ansprüche, **dadurch gekennzeichnet, dass** die Mahlung in einer Gutbett-Walzenmühle mit einem Liniendruck zwischen 15 und 50 kN/cm, vorzugsweise 25 bis 35 kN/cm, durchgeführt wird.

7. Verfahren nach einem der vorhergehenden Ansprüche, **dadurch gekennzeichnet, dass** die Schülpen zusammen mit anderen Materialien einem formgebenden Verfahren, insbesondere einem Knetvorgang und/oder einer Extrusion oder Plattenbeschichtung, zugeführt werden.

8. Verfahren nach einem der Ansprüche 2-7, **dadurch gekennzeichnet, dass** der Katalysatorrohstoff nach dem Verfahrensschritt der Kalzinierung zunächst gesiebt und der erhaltene Grobanteil in einer Walzenmühle, insbesondere einer Gutbett-Walzenmühle, gemahlen wird.

9. Mühle zur Erzeugung eines Katalysatorrohstoffs,
**dadurch gekennzeichnet,**
**dass** die Mühle eine Gutbett-Walzenmühle ist und dass die die Mühle verlassenden Schülpen ohne Durchlaufen einer Desagglomerations- und/oder Dispergiervorrichtung einem nachfolgenden, insbesondere formgebenden, Verfahren zugeführt werden.

10. Mühle nach Anspruch 9, **dadurch gekennzeichnet, dass** die Mühle Bestandteil einer Anlage zur Herstellung von Titandioxid, insbesondere nach dem Sulfatverfahren, ist oder zumindest Bestandteil einer insbesondere einer solchen Anlage unmittelbar nachgeordneten Ergänzungsanlage ist.

11. Mühle nach Anspruch 9 oder 10 **dadurch gekennzeichnet, dass** der Mühle eine den Katalysatorrohstoff weiterverarbeitende Konditionierungs- und/oder Formgebungsvorrichtung, insbesondere ein Kneter und/oder ein Extruder und/oder eine Walze, nachgeordnet ist.

12. Titandioxidhaltiger Katalysatorrohstoff zur Herstellung von Katalysatoren, **dadurch gekennzeichnet, dass** der Katalysatorrohstoff mindestens 50 Gew.-%, bevorzugt mindestens 65 Gew.-%, Titandioxid enthält, eine BET-Oberfläche von 20 bis 400 m²/g, vorzugsweise 50 bis 150 m²/g, aufweist und in Form von bei einer Mahlung in einer Gutbettwalzenmühle erhaltenen Schülpen vorliegt.

13. Titandioxidhaltiger Katalysatorrohstoff zur Herstellung von Katalysatoren, **dadurch gekennzeichnet, dass** der Katalysatorrohstoff mindestens 50 Gew.-%, bevorzugt mindestens 65 Gew.-% Titandioxid enthält und eine BET-Oberfläche von 20 bis 400 m²/g, vorzugsweise 50 bis 150 m²/g aufweist, sowie einen Siebrest von >70% bei einer Trockensiebung über ein Sieb mit 300 µm Maschenweite und einen Siebrest von <5% bei einer Nasssiebung über ein Sieb mit 300 µm Maschenweite aufweist.
